(19) Europäisches Patentamt

European Patent Office

Office européen des brevets

(11) **EP 3 989 167 A1**

(12) **EUROPEAN PATENT APPLICATION**

(43) Date of publication:
**27.04.2022 Bulletin 2022/17**

(21) Application number: **20203410.4**

(22) Date of filing: **22.10.2020**

(51) International Patent Classification (IPC):
**G06T 7/12** *(2017.01)*      **G06T 7/00** *(2017.01)*
**G06T 7/149** *(2017.01)*

(52) Cooperative Patent Classification (CPC):
**G06T 7/12; G06T 7/0012; G06T 7/149;**
G06T 2207/10072; G06T 2207/20081;
G06T 2207/20084; G06T 2207/30008

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AG Eindhoven (NL)**

(72) Inventors:
• **BUERGER, Christian
  5656 AE Eindhoven (NL)**

• **VON BERG, Jens
  5656 AE Eindhoven (NL)**
• **LENGA, Matthias
  5656 AE Eindhoven (NL)**
• **LORENZ, Inventor
  5656 AE Eindhoven (NL)**

(74) Representative: **Philips Intellectual Property &
Standards
High Tech Campus 52
5656 AG Eindhoven (NL)**

(54) **SIMULTANEOUS DETECTION AND CLASSIFICATION OF BONE FRACTURES USING DEFORMATION MODELLING IN MODEL-BASED SEGMENTATION**

(57)  System and related method for image processing. The system comprises an input (IN) interface for receiving an in input image. A segmentor (SEG) performs a segmentation operation to segment the input image for one or more objects. The segmentor applies, in an activation pattern, shape mode operators ($D_j$) to deform a shape prior. A classifier (CL) classifies the one or one more objects based on the activation pattern to obtain a classification result. The system may be used with benefit to classify for bone fracture types.

**FIG. 1**

EP 3 989 167 A1

**Description**

FIELD OF THE INVENTION

The invention relates to a system for image processing, to an imaging arrangement, to an image processing method, to a method of training the machine learning mode, to a computer program element and to a computer readable medium.

BACKGROUND OF THE INVENTION

Medical images obtained for diagnostic purposes may be examined for anatomical abnormalities or pathologies by a human observer. Examples for such anatomical abnormalities might include bone fractures (an abnormality relative to a healthy unbroken bone), or tumorous tissue (abnormality relative to an organ whiteout lesion).

However, inspection of potentially hundreds of image such as cross-sectional slices forming a CT (computed tomography) 3D image volume, is time consuming and prone to errors because of the dependency on the capabilities of the human observer. What is more, such examinations are often required under time pressure in stressful environments, such as in a busy trauma clinic for example.

SUMMARY OF THE INVENTION

There may therefore be a need for improved analysis of image data.

The object of the present invention is achieved by the subject matter of the independent claims where further embodiments are incorporated in the dependent claims. It should be noted that the following described aspect of the invention equally applies to the imaging arrangement, to the image processing method, to the method of training the machine learning mode, to the computer program element and to the computer readable medium. According to a first aspect of the invention there is provided a system for image processing, comprising;

input interface for receiving an in input image;

a segmentor for performing a segmentation operation to segment the input image for one or more objects, based on applying, in an activation pattern, one or more shape mode operators to deform a shape prior; and

a classifier to classify the one or more objects based on the activation pattern to obtain a classification result.

In embodiments, the activation pattern is adjusted by the segmentor in the segmentation operation. The shape mode operators represent different deformation types such as non-rigid transformations including (local), shearing, shifts, compression, dilation, scaling etc. The shape prior(s) represents global geometrical properties of the object, such as a representation of a human bone in the image. The shape mode operators define local geometrical changes to the global model as per shape prior.

In embodiments, the classifier is arranged as a trained machine learning model. This is allows for robust classification.

In embodiments, the system comprises a visualizer configured to output an indication of the classification result.

In embodiments, the visualizer effects display on a display device of the indication and of the input image.

In embodiments, the object is representative of a bone or other anatomy.

In embodiments, the classification result includes a bone fracture type or other abnormalities or pathologies such as caused shape changes by cancerous lesions in an organ. In general, abnormalities as used herein relates to changes of shape to organs or anatomies caused by disease or injury.

In embodiments, the system comprises a localizer configured to localize in the at least one segmented object a feature to which the classification result pertains. In embodiments, the feature is the bone fracture or other medical abnormality or pathophysiology.

In embodiments, the input image is an X-ray image, but other modalities are also envisaged.

In another aspect there is provided an imaging arrangement comprising an imaging apparatus and the system of any one of the above embodiments.

In another aspect there is provided an image processing method, comprising: receiving an in input image;

performing a segmentation operation to segment the input image for one or more objects based on applying, in an activation pattern, one or more shape mode operators to deform a shape prior; and

classifying the one or more objects based on the activation pattern to obtain a classification result.

In another aspect there is provided a method of training the machine learning model.

The proposed system provides a highly responsive automated approach where abnormalities or pathologies can be quickly found and classified, such as fracture types so that subsequent treatment can be put in place accordingly and promptly. The proposed classifier uses internal data, referred to herein as shape mode parameters, generated by the segmentor to quickly return the classification result. The activation pattern is determined by the shape mode parameters. By adjusting the shape mode parameters, the activation pattern is adjusted during the segmentation operation. The shape mode parameters determine which shape mode operators, and to what extent, are to be activated to deform the shape prior in order to fit structures in the image to be segmented. The shape prior may be implemented as mesh models stored in memory. They represent prototypical shapes, such as geometrical primitives of statistical mean models obtained from a population. The shape priors may represent an organ, or part of an organ or other anatomy.

What is proposed herein is to apply to the input image preferably a shape-prior based segmentation algorithm, such as model-based segmentation (MBS) techniques, that include deformation modelling. For example, for each fracture type, a shape mode operator, or deformation model, may be used. During application of the shape mode operator in the segmentation of the target structures, we can observe activation responses as recorded by the shape mode parameters of different shape mode operators. The shape more operators represent the deformation models.

Deformation models/shape mode operators can be of various types, such as a compression acting at a specific location on the shape prior. The shape prior may be implemented as a mesh model for example. Different fracture types can be classified. Fracture types include compression fracture, wedge fractures, or burst-like fractures into fragments of bone dislocated and separated from a remaining bone part.

It has been found that different fracture types are directly correlatable to a shape mode operator/deformation model, which is combined herein with the shape prior. During segmentation of the image, one can observe which deformation model shows high activation responses. Effectively, with the proposed system, one can segment the target structure and simultaneously can observe the activation responses that are needed to provide accurate segmentation results. Depending on the strengths of the activation responses, one can classify the segmented target organ into single or multiple fracture types for example.

In embodiments, a neural network may be used as a machine learning model. The machine learning model takes the activation responses of the different deformation models as input and can be trained to classify same for fractures types as recorded in the input image.

Moreover, by applying the classifier to activation responses associated to different sub-meshes individually, a sub-mesh region can be identified where the fracture is located.

In another aspect there is provided a computer program element, which, when being executed by at least one processing unit, is adapted to cause the processing unit to perform the method as per any one of the above mentioned embodiments.

In another aspect still, there is provided at least one computer readable medium having stored thereon the program element and or the machine learning model.

Definitions

"user" relates to a person, such as medical personnel or other, operating the imaging apparatus or overseeing the imaging procedure. In other words, the user is in general not the patient.

"imaging" as used herein relates to inanimate "object(s)" or human or animal patient, or anatomic parts thereof, or imagery of biological interest, such as microscopic imagery of microbes, viruses etc. Inanimate objects may include an item of baggage in security checks or a product in non-destructive testing. However, the proposed system will be discussed herein with main reference to the medical field, so we will be referring mainly to the "the patient" or a part of the patient to be imaged, such as an anatomy or organ, or group of anatomies or organs of the patient.

In general, the "machine learning" includes a computerized arrangement that implements a machine learning ("ML") algorithm. The machine learning algorithm is configured to learn from training data to perform a task, such as classification. Some machine learning algorithms are model-based. A model based ML algorithm operates to adjust parameters of a machine learning model. This adjustment procedure is called "training". The model is thus configured by the training to perform the task. ML algorithms also include instance-based learning. Task performance by the ML algorithm improves measurably, the more (new) training data is used in the training. The performance may be measured by objective tests when feeding the system with test data. The performance may be defined in terms of a certain error rate to be achieved for the given test data. See for example, T. M. Mitchell, "Machine Learning", page 2, section 1.1, McGraw-Hill, 1997.

BRIEF DESCRIPTION OF THE DRAWINGS

Exemplary embodiments of the invention will now be described with reference to the following drawings, which, unless stated otherwise, are not to scale, wherein:

Figure 1 shows a schematic block diagram of an imaging arrangement;
Figure 2A,B shows an example of a shape prior model;
Figure 3 shows a flow chart of a method of image processing;

Figure 4 shows a schematic block diagram of a machine learning model;
Figure 5 shows a schematic block diagram of a computer-implemented training system to train a machine learning model; and
Figure 6 shows a method of training a machine learning model.

DETAILED DESCRIPTION OF EMBODIMENTS

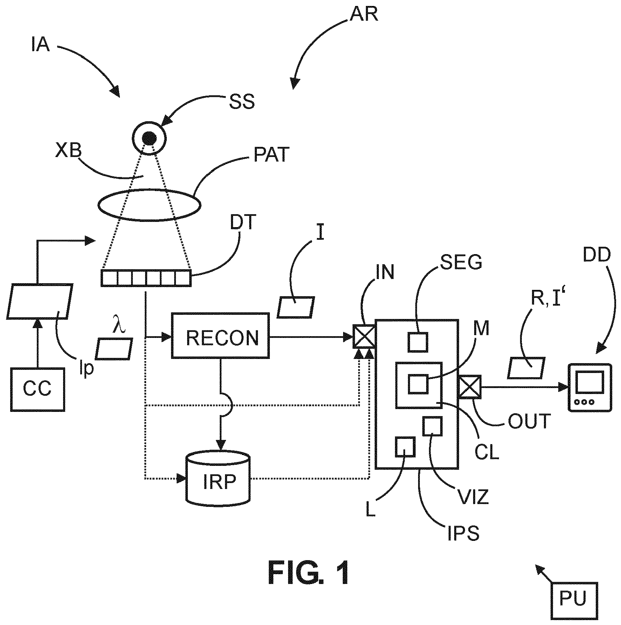

With reference to Figure 1, there is shown a schematic block diagram of a computer-supported imaging arrangement AR.

The arrangement AR comprises, in embodiments, an imaging apparatus IA for supplying imagery and an image processing system IPS to process said imagery.

Very briefly, the image processing IPS includes segmentation SEG and classification CL functionalities to facilitate medical diagnostics in particular under time critical circumstances such as in trauma settings, in A&E or in paramedical work using mobile imaging equipment. Bone fractures for example can be rapidly and robustly identified and the type of facture established to inform downstream procedures. Other medical applications, but also those outside the medical field such as non-destructive material testing, are also envisaged herein. Specifically, and as will be explored more fully below, the system IPS allows in preferred embodiment at least quasi-simultaneous segmentation and classification, and thus rapid processing and result delivery.

The imaging apparatus IA (sometimes referred to herein simply as the "imager") is preferably envisaged herein for medical purposes and is operable to obtain one or more images of at least a part of a patient PAT or of an object of interest. The imaging apparatus may the fixed, such as setup in a medical exam room in a medical facility, or may be mobile/portable such as for use by paramedics as mentioned above, or by other field-frontline workers.

Broadly, the imaging apparatus may comprise a signal source SS to generate an interrogating signal XB. The interrogating signal XB interacts with tissue in patient PAT and is thereby modified. The modified signal is then detected by a detection unit DT. The detected signals, such as intensity values, form projection raw data $\lambda$. The projection raw data $\lambda$ may be of interest in its own right, but at times is further processed by a reconstruction module RECON to produce reconstructed imagery $I$.

The imager IA envisaged herein is configured for structural or functional imaging. A range of imaging modalities is envisaged herein such as transmission imaging, emission imaging or others, such as ultrasound (US) imaging. For instance, in transmission imaging, such as x-ray based imaging mainly envisaged herein, the signal source SS is an x-ray tube and the interrogating signal is an x-ray beam XB generated by the tube SS. In this embodiment, the modified x-ray beam impinges on X-ray sensitive detector pixels of the detection unit DT. The X-ray sensitive detector pixels register the impinging radiation as a distribution of intensity values. The registered intensity values form the projection raw data $\lambda$. The X-ray projection raw data $\lambda$, although sometimes useful in their own right such as in x-ray radiography, may then be transformed into cross-sectional images such as in CT (computed tomography) imaging by the reconstruction module RECON. Specifically, the reconstruction module RECON applies a reconstruction algorithm to the projection imagery, such as filtered back- projection or other algorithms. A cross-sectional image forms a 2D image in 3D space. In CT, a plurality of such cross-sectional images may be reconstructed from different sets of projection images to obtain a 3D image volume. Instead of a CT scanner, the imager IA may be arranged as a U-/C-arm rotational X-ray imaging apparatus.

In MRI imagers, the detection unit is formed from coils, that are capable of picking up radiofrequency signals that represent the projection imagery, from which MRI cross-sectional images may be reconstructed by MRI reconstruction algorithms. The MRI or X-ray imagery (such as CT or radiography) represents structural details of the patient's anatomy.

In emission imaging, such as PET or SPECT, the signal source SS may reside inside the patient in form of a previously administered radioactive tracer substance. Nuclear events caused by the tracer substance are then registered as projection images at a PET/SPECT detector DT arranged around the patient. A PET/SPECT reconstruction algorithm is then applied to obtain reconstructed PET/SPECT imagery that represents functional details of processes inside the patient, such as metabolic processes.

The imaging apparatus IA is controlled by an operator from an operator console CC. The operator can set a number of imaging parameters $Ip$, and/or initiate or halt data acquisition.

Unless specifically stated, in the following, no distinction will be made between reconstructed images or projection raw (image) data, and we will refer to both simply as the "input image(s) or "imagery" $I$ to be processed by the image processing system IPS. In other words, the image processing system IPS may be configured therein to operate on imagery from the projection domain or may operate on imagery reconstructed in imaging domain. Also the, input image may be 2D with image values at pixel locations $(i,j)$ or may be 3D, with image values at voxel locations $(i,j,k)$ organized in a 2D or 3D data structure such as 2D or 3D matrix or matrices, respectively. The pixel/voxel values may represent the quantity of interest, such as an X-ray an attenuation value, a phase contrast value, a dark-field signal, etc.

X-ray with spectral imaging is also envisaged. In other modalities such as MRI, the values may represent strength of an RF frequency signal, or a gamma photon count rate as in emission imaging, etc. In the following, for ease of reference, we will refer to a pixel or voxel or a respective set (region) thereof as an "image element".

The input imagery *I* produced by the apparatus IA is received at the imaging processor IP at its interface IN, through wired or wireless communication means for example. The imagery IM may be received directly from the imaging apparatus, or may be retrieved from a memory, such as an image repository IRP or buffer where the imagery is stored first.

The segmentor SEG of the image processing system IPS processes the input imagery *I* into segmented output imagery *I'*. The segmented output imagery *I'* may be mapped by a visualizing module VIZ on suitable grey values or color values as per a palette, and may then be visualized on a display device DD.

The classifier CL produces a classification result R, which may also be displayed in graphical or textual form concurrently with the segmented image *I'* and or with the input image *I*, as desired. For example, the classification result R may be the type of fracture detected in the input image. The classification result R may be indicated by the visualizer VIZ as a graphical token or a textbox, or by any other suitable widget. The widget may be suitably superimposed as on overlay element for example on either one or both of images *I*, *I'*. The location of the fracture in the input image *I* or in the segmented output image I' may be indicated by the widget or by another widget, such as a hair-cross symbol, an arrow symbol or other pointer symbology for example. The image enhancement processor IPS may thus assist a diagnostician in properly interpreting the input imagery *I* by using the segmented output imagery *I'* and/or the classification result R.

The image processing system IPS may be run on one or more general purpose computing units or on dedicated one or more computing units. The image processing system IPS may be run by a workstation associated with one or more imaging apparatuses IA. The (at least one) computing unit PU may be communicatively coupled to the imaging apparatus or to the imaging repository. In other embodiments the image processing system IPS is integrated into the imaging apparatus IA. The imaging processor IP may be arranged in hardware or software, or in a combination of both, soft- and hardware. Hardware implementations may include suitably programmed circuitry, such as a microprocessor, an FGPA or other general purposes circuitry. Hard-coded circuity is also envisaged herein such as an ASICS or on-chip system, or other. A dedicated processor, such GPU (graphical processing unit), may also be used.

Operation of the image processing system IPS will now be explained in more detail with continued reference to Figure 1.

Input image *I* is received at system IPS input interface IN. Segmentor SEG implements a segmentation algorithm to process input image *I* into the segmented output image *I'*. The segmentation algorithm used by the segmentor component SEG is preferably based on shape-priors, such as a model-based segmentation (MBS) algorithm. In MBS-type algorithms but also others, one or more shape priors S are fitted to structures in the image to effect the segmentation.

As will be explained more fully below, in conjunction with the segmentor SEG segmenting the input image, the classifier CL is operating by tapping into internal data ($p_i$) produced by the segmentor SED during the segmentation operation to compute the classification result R. The nature of this internal data $p_i$ will be explained more fully below. As mentioned, classification result R may be one of a bone fracture type as recorded in the input image *I*. The classification result R may include an orthopedic fracture type classification such as, in the exemplary case of spinal trauma, any one or more of compression type fracture, wedge fractures, burst fractures and others. Other, more general fracture type classifications, applicable to other anatomies than the spine, include transverse, oblique, spiral, comminuted, impacted, torus, greenstick, open (or compound), and closed (or simple), and others still.

The classification result R indicative of the fracture type may be a binary one or may multi-label. The classification result may include probabilities for some or each fracture type. The classification result R, or parts thereof, or data derived therefrom, may be displayed by visualizer VIZ on the display device DD with or without the segmented image *I'* or input image *I*. The classification result R may thus be a 2D vector or a vector of N-dimensions, $N > 2$ entries long $R = (r_1\ r_2, ..., r_N)$. Each entry $r_i$ may represent a probability or other numerical score for input image to represent a bone fracture of type *i* which may be one of the above mentioned orthopedic bone fracture types, or other. The classification result R may be processed to output only the fracture type *i** that attracted the highest probability/score. Alternatively, indications for *n* different bone fracture types are output, with *n* being the number of entries that attracted the highest *n* probabilities. Having more than one fracture type output reflects the possibly that a patient presents with bone fracture that falls under more than one fracture type (mixed mode fracture), and/or that there are in fact multiple fractures of different types recorded in the image *I*.

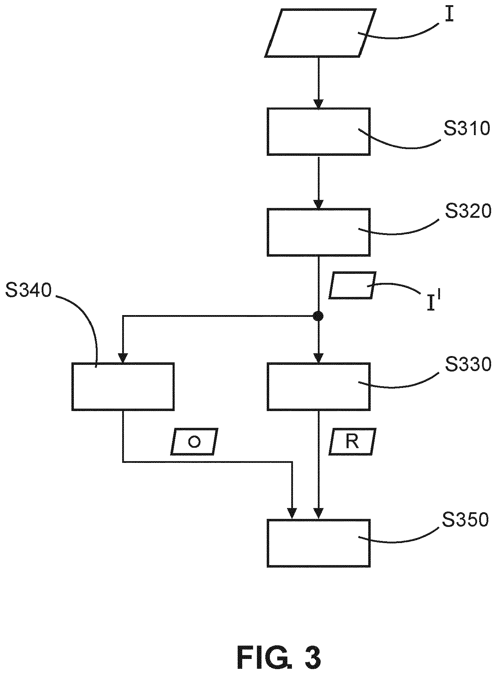

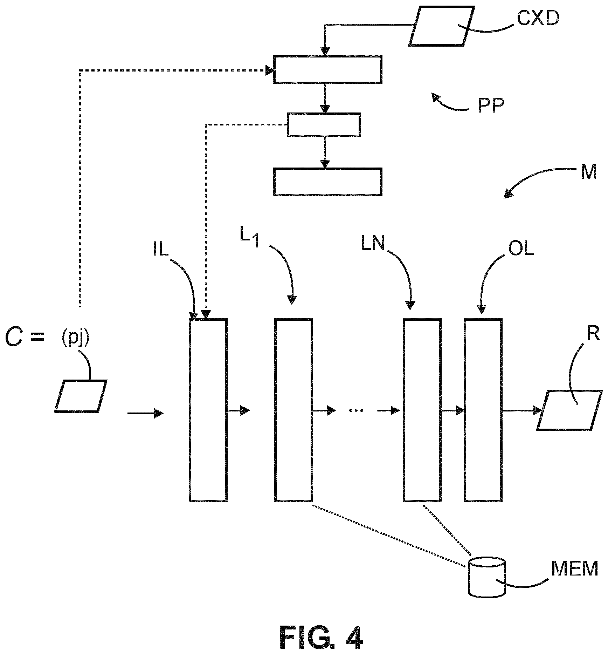

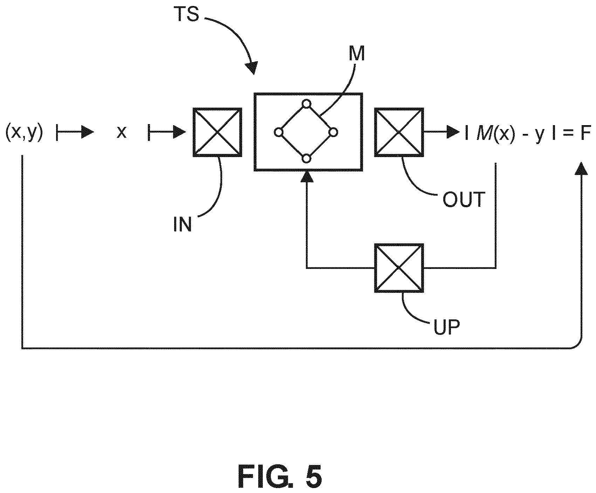

In embodiments, and as will be explored more fully below, the classifier CL may use a machine learning algorithm. Specifically, in embodiments, the classifier CL may include a machine learning model M pre-trained on training data. More particular types of machine models envisaged herein, such as those of the artificial neural-network ("NN")-type, will be described in more detail at Figure 3, with Figures 4 and 5 providing more details on the training phase.

The ML-model M is thus operable in two phases, a prior training phase and a later deployment phase. In training phase an in some model-based embodiments, parameters of the model are adjusted based on training data using an numerical optimization algorithm. Training may be a one-off operation, or may be repeated as new training data emerges.

Once the training phase is concluded the model is considered to be fully trained and can be deployed in deployment phase during clinical use for example, where it can process previously unseen imagery that was not in the training data to produce a particular classification result, preferably jointly with the segmentation $I'$ by segmentor SEG.

Turning now in more detail to the segmentation operation, this designates image objects, that is sub-sets, in the input imagery. As briefly mentioned, the segmentation operation is one where individual image elements such as voxels or pixels, or set(s)/region(s) of pixels /voxels, are assigned labels that indicate a certain semantics of interest. For example, the label may indicate that the given pixel represents a certain tissue or a part of an organ, such as the liver, spleen, bone, etc. The labeling will thus give rise to sub-sets of image elements that that allows a user to discriminate between different tissue types or organs, or parts thereof. Optionally there is a localizer $L$ that processes the segmented image to identify a sub-region that gave rise to the classification result provided by the abnormality classifier CL.

Model-based segmentation mainly envisaged herein is accomplished by fitting shape priors $S_i$ to image structures in the input image to effect the segmentation. A single such shape prior $S_i$, or a linear combination with different weights of different such shaped priors for different shapes, may be fitted to the image structures by the segmentor SEG. Alternatively, different segmentation operation, each using a different shape prior, may be run to find the one that fits best as measured against a quality metric. Model-based segmentation algorithms are one class of segmentation algorithms that use shape priors. Other algorithms that use shape priors in the manner described below are also envisaged, such as atlas/registration driven segmentation approaches.

Image structures arise from how image values spatially vary in different locations of the image. The image structures and the properties of the shape prior are used for the fitting. Initially, the shape prior $S_i$ is superimposed spatially onto the image, at an automatically selected location or at a user selected location. The so placed shape prior $S_i$ is the deformed in a manner to be described more fully below, so as to match the outer contour of the deformed shape prior Si with the surrounding image structures, such as gradients, edges etc. At the conclusion of the fitting operation, which may require iterations of many deformations to be applied, the final shape of the shape prior is considered to demarcate and thus constitute the segmentation. All image locations that are located inside or on the surface of the fitted (suitably deformed) model $S_i$ are considered to belong to a certain common label, such as bone, soft tissue etc.

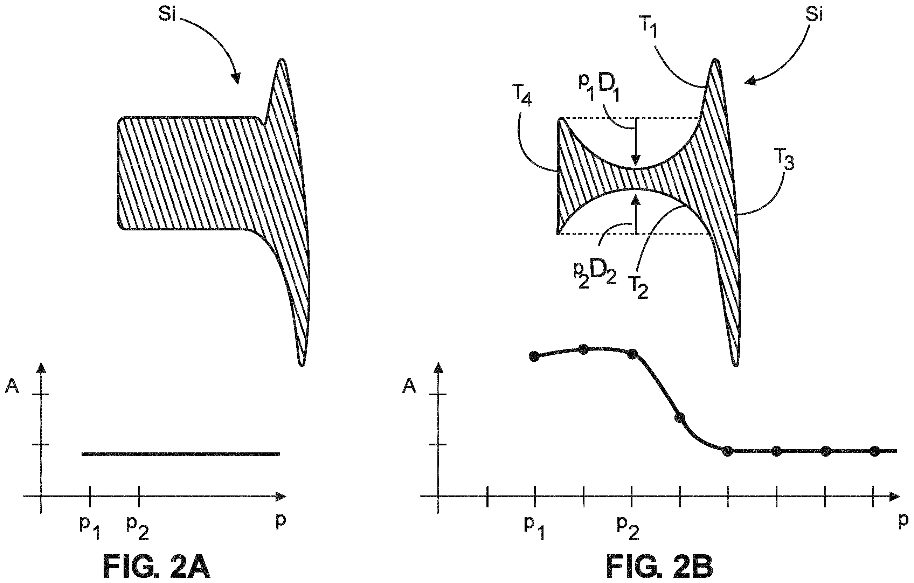

Reference is now made to Figure 2A and 2B which show an example of such a shape prior Si as may be used for fitting to imagery of a mammal/human vertebra. The shape priors Si are shape models. There may be a plurality of different ones of such shape priors for different global shapes, depending on the application such as which organs/tissue distributions one wishes to segment for. The shape priors Si may be stored in a memory MEM as mesh models. Whilst we will be referring in the following to "the shape prior $S_i$", it will be understood that there may be a library of different such shape priors Si and the following processing or aspects in relation to the exemplary, in this case, vertebra shape prior $S_i$ applies equally to any other shape prior $S_j$, $j \neq i$.

The mesh models for shape prior Si comprise edges and vertices, stored in a suitable data structure such as a matrix structure of suitable dimension. The edges and vertices form mesh elements. A polygonal mesh type may be used where the mesh elements comprise polygons, such as triangles, with edges and vertices shared to define an outer surface of the model in the given prototypical shape, such as of a typical vertebra. Edges and/or vertices can be re-assigned to so model deformation.

The shape priors are ideal prototypical shapes such as spheres, cylinders, pyramids, ellipsoids for the 3D case. For processing of 2D imagery, such as in a radiography, 2D shape priors may be used. However, real life structures as recorded in medical imagery will in general not have such ideal shapes, but me be understood as deformed, or perturbed, instances of the shape priors. Alternatively, instead of using shape priors as idealized geometrical primitives/prototypes, "statistical" shape priors based on average measurements of a population is also envisaged herein in preferred embodiments. Such statistical shape priors may be obtained as follows. One collects imagery of a reference cohort of patients. The imagery is annotated by human experts for example, possibly assisted by semi-automatic segmentation tools. The imagery thus includes or example heart annotations. The shape prior may be generated as a mean heart shape with respect to the cohort. In this way one obtains a statistical shape prior, that is, a mean model that represents the mean geometrical appearance, of, for example, as heart, with respect to the reference cohort.

Deformation can be modelled geometrically as forces acting along normals of the mesh elements (eg, polygon surfaces) that make up the mesh model Si. Deformations can be represented by non-rigid transformations which in turn can be represented as matrices, vectors, or combinations thereof. There are different types of such deformations any one or all envisaged herein including compression, expansion, torsion, shearing and/or other, and or a combination of some or all of the foregoing. Each such deformation type is represented as a shape mode operator $D_j$, a transformation.

Each shape prior Si defines in general global geometric characteristics. Shape prior Si can be associated with one or more such shape mode operators $D_j$ to fine-tune global geometric characteristics locally. The shape mode operators $D_j$ describe the manner in which the original prototypical shape prior Sj, such as a ball, ellipsoid, pyramid, statistical shape prior etc, may be deformed by which type of deformation operation, and at which location of the mesh model. Each shape mode operators $D_j$ may be understood as a deformation model. Each such shape mode operator $D_j$ may thus describe the deformation type and the location of a given shape prior where it is to act.

A strength of a mode shape operator is defined by an associated shape mode parameter $p_j$. The shape mode parameter can act on its associated shape mode operator $D_j$. Shape mode parameters may be a scalar value or a vector or a matrix. Each shape mode operators $D_j$ is associated with a certain type of transformation, preferably non-rigid, which implements the respective information type mentioned above such as shearing, torsion, compression etc. Each shape mode operators $D_j$ comprises operational parameters such as vector or matrix entries, directional cosines, angles etc. that define the magnitude or extent of each mode operator $D_j$. For example, a compression vector $D_j$ may define direction of compression, penetration depth and on which mesh element the compression is to act. A torsion matrix may define the axis of torsion, and a torsion angle, and so on for other modes $D_j$ of deformation. Shape mode parameters $p_j$ can be applied to its shape mode operator $D_j$ as a weight $p_j * D_j$ to modulate the operator's strength. The strength of the shape mode operators $D_j$ can be mitigated by setting shape mode parameters $p_j$ less than unity, cancelled by setting shape mode parameters $p_j$ to zero, or amplified by setting shape mode parameters $p_j$ larger than unity. There is a neutral modulation for $p_j$ =1. For example, by setting the respective shape mode parameters accordingly, a penetration depth for a compression can be varied, or a torsion angle of a torsion operator can be varied by multiplication with the respective weight. The shape mode parameters $p_j$ may be mapped to intervals [a, b] other than the unit interval [0,1] as required.

The respective shape mode parameter $p_j$ of a respective transformation $D_j$ such as matrix thus measures and controls the extent or magnitude the respective deformation is to be applied. The shape mode parameters $p_j$ thus allow fine-tuning its respective deformation types $D_j$, and how the deformation is to act on the shape prior Si.

It will be understood that there in general a plurality of such shape mode operators $S_j$, some or each having their own associated shape mode parameter $p_j$ which can be varied independently from each other. By varying the shape mode parameters in different patterns, the shape prior is subjected to a corresponding pattern of deformations at different application strengths. As a result, the overall shape of the given shape prior can be modified.

The segmentor SEG, during segmentation, varies the shape mode parameters in an optimization procedure to so accommodate the shape prior to the image structure thereby arriving at the segmentation result. It has been found that the pattern of the adjusted shape mode parameters can be correlated with a fracture type to obtain the classification result. The machine learning algorithm or model M implemented by the classifier CL is thus trained to map the pattern of the adjusted shape mode parameters to fracture type to effect the classification.

The above described concepts are illustrated with reference to the vertebra model as shown in Figures 2A and 2B. Figure 2A shows an unperturbed original shape prior model of a vertebra Si having broadly a cylindrical shape with protrusions, referred to as processes in this connection. Shape prior Si comprises mesh surface elements, such as polygon surfaces $T_j$ of which only four $T_1$-$T_4$ are shown, but this only for illustration. Two applicable shape mode operators $D_1$, $D_2$ are shown in Figure 2B as two opposed compressions, acting on surfaces $T_1$ and $T_2$, respectively. The two compressions, when enabled by setting their respective shape mode parameters $p_1, p_2 \neq 0$, allow modeling for example a compression type fracture along the longitudinal axis of the patient. No other deformation is active in the compression fracture example Figure 2B, so the other parameters $p_j, j \neq 1,2$ for other deformation types $D_j, j \neq 1,2$ are set to zero.

The manner in which the collection of shape mode parameters $p_i$ are set thus gives rise to an activation or combination pattern $C=(p_1, p_2, ... p_j ... p_N)$ of shape mode parameters. Exemplary activation patterns $C$ are shown in two graphs, with the vertical axis representing the activation level $A$, and the horizontal axis indicating the indices j of the shape model parameters $p_j$. The individual shape mode parameters $p_j$ can be thought to be normalized as values between 0 and 1 or in any other range [a,b], with a<b any two numbers as mentioned earlier. Some deformation types may be more active than others as shown in the activation pattern graphs. In the undistorted prototype Figure 2A, there is no activity at all, whilst in the deformed model for compression fracture, there is activity at j=1,2 with $p_1$, $p_2$ enabling the two compressions along the respective surfaces T1, T2. Other deformation modes $D_{3-N}$ such as shearing, twisting etc, encoded by some of the remaining parameters $p_3$-$p_N$ say, are not active in this example. In other words, each deformation model and hence fracture type for a given shape prototype $S_i$ is associated with an activation curve $A$ or activation pattern $C=(p_1, p_2, ... p_j, ... p_N)$ of shape mode parameters $p_j$. This activation level curve thus encodes the manner in which the different deformation operators $D_j$ need to be combined in order to fit shape prior model $S_i$ to image structure during a given segmentation of a given image $I$.

The activation level $A$ is the result of the segmentation operation by segmentor SEG. The segmentor SEG applies a numerical optimization procedure where an objective function is optimized. For example, the segmentation can be formulated as a cost function F that is to be minimized, but the dual formulation of a maximization of a utility function is also envisaged. More formally, the MBS-operation can be formulated as an optimization to find the correct shape mode parameters $p^{*}_{j..N}$ per the following equation:

$$\min_{p_{j..N}} F(p_1, p_2 ... p_N, I) = || ( p_N D_N {}^\circ ... {}^\circ p_2 D_2 {}^\circ p_1 D_1(S_k) ), I|| \qquad (1)$$

wherein: -

$||\cdot,\cdot||$ is a measure to quantify a distance between the segmentation and the image structures in the input image $I$;

$S_k$ is a shape prior including set of polygon surface $T_j$ with normal;

$D_j$ ($j=1...N$) each a shape mode operator, where index $j$ defines type of deformation and on which one or more surfaces it acts on $S_k$;

$p_j$ the respective shape mode parameter applied as a weight to the respective deformation operator $D_j$; and

wherein the circle symbol " ° " indicates functional composition.

The optimization may include adjusting the parameters pj. Each shape prior is being modified by is shape mode operator combination $p_N D_N° ... °p_2 D_2° p_1 D_1$ modulated as per the respective activation pattern $C_k=(p_{1,k}, p_{2,k} ... p_{j,k} ... p_{N,k})$ for shape prior $S_k$ (in the following we shall drop the shape prior index "$k$").

It may be appreciated that in general a given activation pattern $C^k$ for a given shape Sk is not binary such as (1, 1, 0,, 0,... 0) as in the simple vertebra example in Figure 2B. Rather some or all entries $p_j$ in the activation pattern may be other than 0's or 1's thus resulting more complex activation patterns. In the simple "toy example" in Figure 2B is was only the two compressions along $T_1$, $T_2$ that were "on", whilst other shape mode operators $S_j$, $j\neq1,2$ were "off". More complex activation patterns reflect the fact that a fracture type may not necessarily be described by a single deformation type on a single shape prior $S_k$, but as a certain combination of different deformation types $D_j$ in different magnitudes and characteristics as captured by the parameters $p_j$.

It will be understood that objective function F in (1) may include additional terms. The objective function in (1) is purely or largely model driven. Additional one or more terms sometime referred to as "external energy" terms that represent the cost for the manner in which the image values should be taken account for the segmentation. The terms as shown in eq (1) are sometimes referred to as "internal energy"-terms define shape prior cost, that is, the manner in which the prototypes themselves need to be modified in order to achieve the fitting. The parameters may further include elasticity parameters (not shown) that incur greater costs for deformation of shape priors that model anatomies with greater stiffness than a deformation of a shape prior that represents more flexible tissue. Greater cost are incurred for unrealistic deformations for a given anatomy/shape prior. The shape priors with the shape parameters and deformation operators thus constitute shape/anatomical prior knowledge. There is in general a trade-off as to what extent the characteristics of the shape model (internal energy) is to be considered versus the structural image information (such as edges, gradients, etc) encoded within the image to be segmented (external energy). Suitable model based-type segmentation algorithms have been described in the past such as by MBS algorithms have been reported elsewhere such as by O. Ecabert et al in "Automatic model-based segmentation of the heart in CT images", published in IEEE Trans. Med. Imaging, vol 27(9), pp 1189-11201 (2008).

The optimization eq (1) can be implemented by segmentor SEG using numerical optimization schemes such gradient-descent based. The numerical optimization schemes may be iterative when in one or more iterations the model Si is so adapted according to different activation patterns. The activation pattern is adapted in steps over iteration cycles, with the respectively modulated operator $D_j$ acting along normals over the respective mesh polygon surfaces for example such as for compression or expansion/dilation. Once a stopping condition is fulfilled, or upon user request, the optimization iteration cycles are terminated, the currently deformed set of one or more shaped priors, as recorded in the current activation pattern, is made available as the final or intermediate segmentation result.

During the iterations in which the activation patterns ($p_1, p_2, ...p_j, ... p_N$) are adapted, or are at a conclusion of the iterations, the classifier CL analyzes and processes the activation pattern of some or all shape priors $S_k$ (if there is more than one), to produce the classification result R. It has been overserved that whilst there may be more iterations required for computing the final segmentation, an intermediate activation pattern obtained at an earlier iteration cycle may already provide a good enough indication for the fracture type and the classifier CL can compute this, whilst the segmentor SEG keeps iterating to find the final best deformation to conclude the segmentation. Some segmentation and classification results can thus be computed quasi-simultaneously. The classification result may be updated once the segmentation iterations have concluded for the final segmentation result. Once segmentation is done, the activation weights $p_j$ are directly available and can be read out. That is, once segmentation is done, the activation weights $p_j$ directly indicate to the classier CL the deformation type /fracture type. In other words, the final/intermediate results of the segmentation simultaneously yield the final/intermediate classification result.

As observed above, the activation curve or activation pattern C of the shape mode parameters is a tell-tale for the fracture type. However, because, as mention above, the activation patterns may be complex rather than binary, the classification task is in general not a matter of a simple thresholding against the pattern entries, although in certain instances this is also envisaged herein in embodiments, but can be done more robustly with machine learning ML. It will be understood that the specific order of the parameters $p_j$ in the pattern is arbitrary, but once defined should be preferably adhered to that the machine learning model can quickly learn to correctly associate activation pattern with the respective fracture type. If the order of entries within training pattern varies, more training data may be required and it may take longer to train the model until its learns to generalize to an acceptable level.

As mentioned, the shape mode operators $D_j$, and hence their shape mode parameters $p_j$, encode not only the manner of deformation such as compression, shearing etc, but also have a local component that indicates where, that is on which polygonal surface of the mesh $S_k$, the respective deformation operation is to act. For instance, in Figure 2B the particular shape mode operators Di, $D_2$ are associated surfaces $T_1$, $T_2$ at the cranial and caudal end of the vertebra, respectively. The localizer L can hence localize where, that is on which single one or group of polygon mesh surfaces of the shape prior $S_k$, the fracture is localized by examining which parameters have been active in the activation pattern, or have been active above a certain activation threshold. Whilst the localization component L may also be implemented as a machine learning model, this is not necessary as this can be done by a simple look-up operation.

Reference is now made to the flow chart of Figure 3 which shows steps of a method of image processing implementing embodiments of the above described segmento-classifier IPS. However, it will be understood that the method and steps to be explained below are not necessarily tied to the architecture explained above in Figure 1-3 and in particular, that the method may be understood as a teaching in its own right.

At step S310 an input image $I$ to be segmented is received.

At step S320 the input image $I$ is segmented, based on a shape prior- based segmentation algorithm. During the segmentation, which may be iterative, one or more shape priors are adapted based on the image structures by applying in an activation pattern one or more shape mode or deformation operators $D_j$ of different types, at one or more locations of the respective shape prior. The activation pattern may be defined by shape mode parameters. The shape mode parameters modulate the magnitude and extent of how the respective deformation operators $D_j$ of different types are to be applied or activated.

The deformation operators $D_j$ allow fitting the shape prior to image structures in the image $I$ to be segmented. The shape priors may be mesh models stored in memory.

The locations of applications of the deformations to the shape priors, as well as its type, may be encoded by the shape mode parameters.

During the segmentation, one or more of the shape mode parameters are adjusted. The adjusted shape mode parameters represent the activation pattern. The activation pattern defines in which pattern the shape mode operators $D_j$ are to act in concert on the shape mode prior to obtain an optimized segmentation. The deformed (one or more) shape priors represent the segmentation result.

At step S330 a classifier analyzes the activation pattern to compute a classification result. The classification result may for instance indicate a fracture type but may also indicate other medical abnormalities of findings, such as a cancer type for instance or any other relevant medical information that will depend on the type of imagery used. For instance, MRI imagery may be processed to classify soft tissue that is usually insufficiently contrasted in x-ray transmission imagery. The classification result may be a binary one or may be a probability distribution over the different classification types of interest such as fracture types, cancer types etc.

At an optional step at step S340, respective classification is localized, based on the one or more shape priors fitted during the classification. One or more locations in the (one or more) shape prior model used in the segmentation is identified that gave rise to the classification result. A magnitude of the respective shape mode parameters can be used to identify the location. For example, the location on the shape prior associated with the highest value shape mode parameter may be used to indicate the location. Alternatively, all locations associated with shape mode parameters higher than a significance threshold are used together to indicate the location of the medical abnormality of interest, such as the fracture. For instance, it can be indicated in the model Si where the fracture type, such as a compression type fracture, is located. Localization indication may include designating the one or more mesh elements of the shape prior that experienced the respective deformations associated with the shape mode parameters that exceeded the significance threshold.

At step S350 the classification result and/or the segmented image I and/or a segmentation map are displayed on the display device. The displaying at step S350 may also include displaying the original image.

Reference is now made to Figure 4 which shows one embodiment of a machine based implementation of the classifier CL. Specifically, Figure 4 shows a schematic block diagram of a machine learning model M of the artificial neural network type. In particular, and in embodiments, an at least partially convolutional neural-network type ("CNN") is used, which includes one or more layers that are non-fully connected layers. Figure 4 shows a schematic block diagram of a neural network M of the feed-forward type, but recurrent architectures are not excluded herein.

The model M may be trained by a computerized training systems TS to be described more fully below at Figure 5. In training, the training system TS adapts an initial set of (model) parameters θ of the model M. In the context of neural network models, the parameters are sometime referred to herein as network weights. The training data may be generated by simulation or may be procured from medical databases or similar as will be described in more detail below in relation to Figure 5. Two processing phases may thus be defined in relation to the machine learning model M as mentioned earlier: the training phase and the deployment (or inference) phase.

In training phase, prior to deployment phase, the model is trained by adapting its parameters based on the training data. Once trained, the model may be used in deployment phase to segment new imagery encountered in daily clinical practice for example. The training may be a one-off operation, or may be repeated once new training data become available.

The machine learning model M may be stored in one (or more) computer memories MEM'. The pre-trained model M may be deployed as a machine learning component that may be run on a computing device PU, such as a desktop computer, a workstation, a laptop, etc or plural such devices in a distributed computing architecture. Preferably, to achieve good throughput, the computing device PU includes one or more processors (CPU) that support parallel computing, such as those of multi-core design. In one embodiment, GPU(s) (graphical processing units) are used.

Referring now in more detail to Figure 4, the network M may comprise a plurality of computational nodes arranged in layers in a cascaded fashion, with data flow proceeding from left to right and thus from layer to layer. Recurrent networks are not excluded herein.

In deployment, the input data is applied to input layer IL, such as a current activation pattern $C$, optionally complemented with contextual data CXD. Contextual data CXD my include bio-characteristics of the patient imaged in image $I$, or the imaging parameters $Ip$ used to acquire the input image, or the input image $I$ itself.

The input activation pattern $C$ propagates through the sequence of input layer IL and hidden layers $L_1$-$L_N$ (only two are shown, but there may be merely one or more than two), to then emerge at an output layer OL as an estimate output $M(C)$. As per the embodiments described above, the output M(C) includes a classification result R, such as fracture type.

The model network M may be said to have a deep architecture because it has more than one hidden layers. In a feed-forward network, the "depth" is the number of hidden layers between input layer IL and output layer OL, whilst in recurrent networks the depth is the number of hidden layers, times the number of passes.

Some of all of the hidden layers include a sequence of convolutional layers. The number of convolutional layers is at least one, such as 2-5, or any other number. Some hidden $L_m$ layers and the input layer IL may implement one or more convolutional operators. Each layer $L_m$ may implement the same number of convolution operators or the number may differ for some or all layers. Optionally, zero-padding P may be used.

One or more of the layer $L_i$ may be configured as one or more fully connected layers. In an example, the output layer OL is a fully connected layer. In embodiments, a run of one or more such fully connected layers is arranged downstream or upstream a run or one or more convolutional layers. Alternatively, there are no convolutional layers, but only fully connected layers.

A convolutional layer is distinguished from a fully connected layer in that an entry in the output feature map of a convolutional layer is not a combination of all nodes received as input of that layer. In other words, the convolutional kernel is only applied to sub-sets of the input image to the feature map as received from an earlier convolutional layer. The sub-sets are different for each entry in the output feature map. The operation of the convolution operator can thus be conceptualized as a "sliding" over the input, akin to a discrete filter kernel in a classical convolution operation known from classical signal processing. Hence the naming "convolutional layer". In a fully connected layer FC, an output node is in general obtained by processing all nodes the previous layer.

Each layer $L_i$ process an input feature map from an earlier layer into an intermediate output, sometimes referred to as logits. An optional bias term may be applied by addition for example. An activation layer processes in a non-linear manner the logits into a next generation feature map which is then output and passed as input to the next layer, and so forth. The activation layer may be implemented as a rectified linear unit RELU as shown, or as a *soft-max*-function, a sigmoid-function, *tanh*-function or any other suitable non-linear function. Optionally, there may be other functional layers such as pooling layers or drop-out layers to foster more robust learning. The pooling layers reduce dimension of output whilst drop-out layer sever connections between node from different layers.

In embodiments, the output layer OL may be configured as a combiner layer, such as a *soft-max*-function layer or as similar computational nodes, where feature maps from previous layer(s) are combined into normalized counts to represent the classification probability per fracture type class. The classification result R provided by the network M may include a binary classification into two labels if for example only one fracture type is of interest. Alternatively, fracture-type classifications, with multi-label classification may be provided by the output layer OL.

If patient bio-characteristics, or other (non-image) contextual data CXD is to be co-processed in addition to the activation pattern data $C$, this may need to be transformed first into a suitable representation or encoding by prep-processor network PP. This is because context data CXD may suffer from sparse representation which may be undesirable for efficient processing alongside the activation pattern $C$. One-hot encoding and processing by an autoencoder network may be used to transform the (non-image) context data CXD into a more suitable, denser representation. In embodiments, whether or not there is processing of context-data CXD, it is the input activation pattern $C$ itself that may suffer from sparse representation. In such embodiments, it is the activation pattern $C$ that is pre-processed first by prep-processor PP to transform activation pattern C as received from segmentor SEG into a denser, or more suitable representation C', and this is then forwarded to input layer IL of model M.

It will be understood that the above described model M in Figure 4 is merely according to one embodiment and is not limiting to the present disclosure. Other neural network architectures are also envisaged herein with more or less or different functionalities than describe herein. Multi-model networks, such as GAN (generative adversarial networks as reported by I. Goodfellow et al in "Generative Adversarial Networks", submitted June 2014, arXiv: 1406.2661. What is more, models M envisaged herein are not necessarily of the neural network type at all, such as support vector machines, decision trees, random forests, etc. Other, model based or instance-based ML techniques are also envisaged herein. The model-based approaches may be of the discriminative type as the NN in Figure 4, or may be of the generative type. Instance-based approaches for segmentation include k-NN("nearest neighbor")-approaches for example. Classical statistical classification methods based on sampling from training data are also envisaged herein in alternative embodiments. Still other techniques may include Bayesian networks, or random fields, such as Markov type random field and others.

Figure 5 shows a training system for training a machine learning model for use as classifier CL. In the above described exemplary model-based approach, such as a NN-type models M, the totality of the weights for all layers, define a configuration of the machine learning model. The weights may differ for each layer and each layer. It is in particular these weights that are learned in a training phase. Once the training phase has concluded, the learned weights, together with the architecture in which the nodes are arranged, can be stored in one or more data memories MEM' and can be used for deployment.

In supervised learning, the training data comprises $k$ pairs of data $(x_k, y_k)$. $k$ may run into the 100s or 1000s. The training data comprises for each pair $k$ (the index $k$ is not related to the index used above to used indices), training input data $x_k$ and an associated target $y_k$. The training data is thus organized in pairs $k$ in particular for supervised learning schemes as mainly envisaged herein. However, it should be noted that non-supervised learning schemes are not excluded herein.

The training input data $x_k$ includes activation patterns for historical shape-prior based segmentations, such as historical applications of MBS-algorithms. The activation patterns may be obtained from medical records, such as may be held in a PACS (picture archive communication system) or a HIS (hospital information system), for instance, or any other medical records. The targets $y_k$ or "ground truth" may represent the fracture type classifications associated with segmented imagery for which the activation patterns C has been obtained. The fracture types may also be retrieved from PACS databases or other medical data records. Alternatively, the fracture type label is assigned by a human expert. If it is not possible to retrieve the historical activation patterns $C$, the training data may be artificially generated. Imagery of a range of fracture types are identified in medical databases based on medical records or meta-data. The imagery is then segmented by a suitable MBS algorithm or other shape-prior based segmentation algorithms, to so obtain the associated activation patterns, and hence the training data pairs ($x_k = \tilde{C}, y_{k=}\tilde{R}$). The tilde "~" notation indicates historical activation patterns and historical classification results.

If training is to include contextual data CXD, there is in general no contextual data included in the target $y_k$. In other words, for learning with contextual data the pairs may in general have a form $((x_k, d), y_k)$, with non-image context data $d$ only associated with the training input $x_k$, but not with the target $y_k$.

As to the shape mode operators $D_j$, an explicit description may be obtained as follows. For example, for a single mode modelling of a compression fracture, one may rely on a set of imagery of healthy patients with e.g. vertebra annotations of non-fractured vertebra and a set of lesioned patients with e.g. vertebra annotations of fractured vertebra. The two stets of imagery can be retrieved from a PACS for example. One may then train a typical deformation from uncompromised vertebrae to compression-fractured vertebrae to generate a model $D_j$ for that mode. For example, one may use a PCA analysis or other dimension reducing or clustering algorithm to find major Eigenmodes. The Eigenmodes so found may then be used to a major deformation model for vertebrae compression. A similar analysis may be done for other bones/organs to so build up a library of operators for a given shape prior.

Turning now in more detail to the training phase to learn the activation pattern versus classification result relationship, an architecture of the machine learning model M, such as the NN-network in Figure 4, is pre-populated with initial set of weights. The weights $\theta$ of the model M represent a parameterization $M^\theta$, and it is the object of the training system TS to optimize and hence adapt the parameters $\theta$ based on the training data $(x_k, y_k)$ pairs. In other words, the learning can be formulated mathematically as an optimization scheme where a cost function $F$ is minimized although the dual formulation of maximizing a utility function may be used instead.

Assuming for now the paradigm of a cost function $F$, this measures the aggregated residue(s), that is, the error incurred between data estimated by the model M and the targets as per some or all of the training data pairs $k$:

$$argmin_\theta F = \sum_k || M^\theta(x_k), y_k || \qquad (2)$$

In eq. (2) and below, function $M()$ denotes the result of the model M applied to input $x_k$. For classifiers as mainly envisaged herein, the distance measure $||\cdot||$ is formulated instead as one of cross-entropy or Kullback-Leiber divergence or similar.

In training, the training input data $x_k$ of a training pair is propagated through the initialized network M. Specifically, the training input activation pattern $x_k$ for a $k$-th pair is received at an input IL of model M, passed through the model and is then output at output OL as output training data $M^\theta(x)$. The measure $||\cdot||$ is configured to measure the difference, also referred to herein as residue, between the actual training output $M^\theta(x_k)$ produced by the model M, and the desired classification target $y_k$. Any such suitable measure may be used.

The output training data $M(x_k)$ is an estimate for target $y_k$ associated with the applied input training image data $x_k$. In general, there is an error between this output $M(x_k)$ and the associated target $y_k$ of the presently considered $k$-th pair. An optimization scheme such as backward/forward propagation or other gradient-descent based methods may then be used to adapt the parameters $\theta$ of the model M so as to decrease the aggregated residue (the sum in (2)) for all or a subset of pairs $(x_k, y_k)$ of the full training data set.

After one or more iterations in a first, inner, loop in which the parameters $\theta$ of the model are updated by updater UP for a current pair $(x_k, y_k)$, the training system TS enters a second, an outer, loop where a next training data pair $x^{k+1}$, $y^{k+1}$ is processed accordingly. The structure of updater UP depends on the optimization scheme used. For example, the inner loop as administered by updater UP may be implemented by one or more forward and backward passes in a forward/backpropagation algorithm. While adapting the parameters, the aggregated, summed (2), residues of all the training pairs are considered up to the current pair, to improve the objective function. The aggregated residue can be formed by configuring the objective function $F$ as a sum of residues such as in eq. (2). Process flow the processed in alternation through the inner and outer loop until or a desired minimum number of training data pairs have been processed.

The training system as shown in Figure 5 can be considered for all model-based learning schemes, in particular supervised schemes. Unsupervised learning schemes may also be envisaged herein in alternative embodiments. Whilst Figure 5 mainly relates to model-based learning, instant-based learning schemes are also envisaged instead in alternative embodiments. Also, whilst Figures 4 and 5 relate to parameterized models, non-parametric ML algorithms are not excluded herein. GPUs may be used to implement the training system TS.

The fully trained machine learning module M may be stored in one or more memories MEM or databases, and can be made available as pre-trained machine learning model M for classifier CL. The trained model may be made available in a cloud service. Access can either be offered free of charge or their use can be granted via license-pay or pay-per-use scheme. Whilst main reference has been made above to fracture type classification, other classifications into types of medical abnormities/pathologies are also envisaged herein.

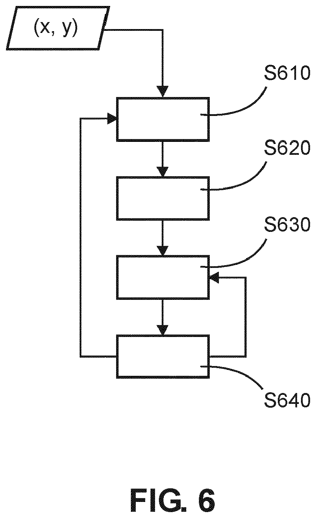

Figure 6 shows a flow chart of a method of training a machine learning module such as the one described above in Figure 4, or others.

Suitable training data needs to be collated as described above. Preferably, supervised learning schemes are envisaged herein although this is not a necessity as unsupervised learning setups are also envisaged herein.

In supervised learning, the training data includes suitable pairs of data items, each pair including training input data and associated therewith a target training output data. Specifically, the pairs comprise a respective historical activation pattern in association with a historical classification result, such as a fracture type.

With continued reference to Figure 6, at step S610 training data is received in the form of pairs $(x_k, y_k)$. Each pair includes the training input $x_k$ and the associated target $y_k$, as defined in Figure 5 above.

At step S620, the training input $x_k$ is applied to an initialized machine learning model NN to produce a training output $M(x_k)$.

At step S630, a deviation, or residue, of the training output $M(x_k)$ from the associated target $y_k$ is quantified by a cost function $F$. One or more parameters of the model are adapted at step S640 in one or more iterations in an inner loop to improve the cost function. For instance, the model parameters are adapted to decrease residues as measured by the cost function. The parameters may include weights $W$ of an NN model M.

The training method then returns in an outer loop to step S610 where the next pair of training data is fed in. In step S620, the parameters of the model are adapted so that the aggregated residues of all pairs considered are decreased, in particular minimized. The cost function quantifies the aggregated residues. Forward- backward propagation or similar gradient-based techniques may be used in the inner loop.

More generally, the parameters of the model M are adjusted to improve objective function $F$ which is either a cost function or a utility function. In embodiments, the cost function is configured to the measure the aggregated residues. In embodiments the aggregation of residues is implemented by summation over all or some residues for all pairs considered. The method may be implemented on one or more general-purpose processing units TS, preferably having processors capable for parallel processing to speed up the training.

Whilst Figure 6 relates to a parameterized, model-based training, non-parameterized ML training schemes and/or instance-based ML training schemes area also envisaged herein in embodiments.

The components of the image processing system IPS or training system TS may be implemented as one or more software modules, run on one or more general-purpose processing units PU such as a workstation associated with the imager IA, or on a server computer associated with a group of imagers.

Alternatively, some or all components of the image processing system IPS or training system TS may be arranged in hardware such as a suitably programmed microcontroller or microprocessor, such an FPGA (field-programmable-gate-array) or as a hardwired IC chip, an application specific integrated circuitry (ASIC), integrated into the imager IA. In a further embodiment still, the image processing system IPS may be implemented in both, partly in software and partly in hardware.

The different components of the image processing system IPS or training system TS may be implemented on a single data processing unit PU. Alternatively, some or more components are implemented on different processing units PU, possibly remotely arranged in a distributed architecture and connectable in a suitable communication network, such as in a Cloud setting or client-server setup, etc.

One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

**Claims**

1. System for image processing, comprising;

input interface (IN) for receiving an in input image;

a segmentor (SEG) for performing a segmentation operation to segment the input image for one or more objects, based on applying, in an activation pattern, one or more shape mode operators ($D_j$) to deform a shape prior; and

a classifier (CL) to classify the one or more objects based on the activation pattern to obtain a classification result.

2. System of claim 1, wherein the activation pattern is adjusted by the segmentor (SEG) in the segmentation operation.

3. System of any of the previous claims, wherein the classifier (CL) is arranged as a trained machine learning model (M).

4. System of any of the previous claims, comprising a localizer (L) configured to localize in the one or more object a feature to which the classification result pertains.

5. System of any of the previous claims, comprising a visualizer (VIZ) configured to output an indication of the classification result.

6. System of claim 5, the visualizer to effect display on a display device (DD) of the indication and of the input image.

7. System of any of the previous claims, wherein the object is representative of a bone.

8. System of any of the previous claims, wherein the classification result includes a bone fracture type.

9. System of any of the previous claims, wherein the input image is an X-ray image.

10. An imaging arrangement (IAR) comprising an imaging apparatus (IA) and a system of any one of the previous claims.

11. An image processing method, comprising:

receiving (S310) an in input image;

performing (S320) a segmentation operation to segment the input image for one or more objects based on applying, in an activation pattern, one or more shape mode operators ($D_j$) to deform a shape prior; and

classifying (S330) the one or more objects based on the activation pattern to obtain a classification result.

12. A method of training the machine learning model of any one of claims 3-11.

13. A computer program element, which, when being executed by at least one processing unit (PU), is adapted to cause the processing unit to perform the method as per any one of claims 11 and 12.

14. At least one computer readable medium having stored thereon the program element, or having stored thereon the machine learning model as per claim 13.

**FIG. 1**

FIG. 2A

FIG. 2B

I

S310

S320

I'

S340

S330

O

R

S350

**FIG. 3**

**FIG. 4**

**FIG. 5**

**FIG. 6**

Europäisches
Patentamt

European
Patent Office

Office européen
des brevets

# EUROPEAN SEARCH REPORT

**Application Number**

EP 20 20 3410

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEUNG K-W ET AL: "On deformable models for visual pattern recognition", PATTERN RECOGNITION, ELSEVIER, GB, vol. 35, no. 7, 1 July 2002 (2002-07-01), pages 1507-1526, XP004345150, ISSN: 0031-3203, DOI: 10.1016/S0031-3203(01)00135-2 * title * * page 1507, right-hand column, line 9 - right-hand column, line 9 * * page 1512, left-hand column, line 1 * * page 1519, right-hand column * * page 1520, right-hand column, lines 10-14 * ----- | 1-3,5,6, 9-14 | INV. G06T7/12 G06T7/00 G06T7/149 |
| X | US 2017/336713 A1 (MIDDLEBROOKS SCOTT ANDERSON [NL] ET AL) 23 November 2017 (2017-11-23) * paragraphs [0002], [0074], [0076], [0077] * * claim 12 * ----- | 1,2,4-6, 10,11, 13,14 | |
| X | Martin Roberts: "Automatic Detection and Classification of Vertebral Fracture using Statistical Models of Appearance", , 1 January 2008 (2008-01-01), XP055041405, Retrieved from the Internet: URL:http://personalpages.manchester.ac.uk/ staff/martin.roberts/mrthesis.pdf [retrieved on 2012-10-17] * abstract * * page 62, equation 4.11 * * page 144, lines 6-7 * ----- | 1-14 | TECHNICAL FIELDS SEARCHED (IPC) G06T G06K |

The present search report has been drawn up for all claims

| Place of search | Date of completion of the search | Examiner |
|---|---|---|
| Munich | 1 April 2021 | Winkler, Gregor |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 20 3410

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2021

| Patent document cited in search report | | Publication date | Patent family member(s) | | Publication date |
|---|---|---|---|---|---|
| US 2017336713 | A1 | 23-11-2017 | TW | 201633001 A | 16-09-2016 |
| | | | US | 2017336713 A1 | 23-11-2017 |
| | | | US | 2019391498 A1 | 26-12-2019 |
| | | | US | 2020356009 A1 | 12-11-2020 |
| | | | WO | 2016091534 A1 | 16-06-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **T. M. MITCHELL.** Machine Learning. McGraw-Hill, 1997, 2
- **O. ECABERT et al.** Automatic model-based segmentation of the heart in CT images. *IEEE Trans. Med. Imaging,* 2008, vol. 27 (9), 1189-11201
- **I. GOODFELLOW et al.** *Generative Adversarial Networks,* June 2014